# EUROPÄISCHE PATENTSCHRIFT

(11) **EP 2 427 317 B1**
(45) Veröffentlichungstag und Bekanntmachung des Hinweises auf die Patenterteilung: **31.08.2016**
(21) Anmeldenummer: 10716535.9
(22) Anmeldetag: 27.04.2010
(51) Int. Cl.: B29C 45/27, B29C 45/28

(54) **HEISSKANALDÜSE ZUR SEITENANSPRITZUNG**
HOT RUNNER FOR SIDE INJECTION
BUSE CHAUDE D'INJECTION LATÉRALE

(30) Priorität: 06.05.2009 DE 202009004786 U
(43) Veröffentlichungstag der Anmeldung: 14.03.2012
(73) Patentinhaber: EWIKON Heisskanalsysteme GmbH, 35066 Frankenberg (DE)
(72) Erfinder: BRAUN, Peter, 35410 Hungen (DE)
(74) Vertreter: Specht, Peter
(86) Internationale Anmeldenummer: PCT/EP2010/055651
(87) Internationale Veröffentlichungsnummer: WO 2010/127965

(56) Entgegenhaltungen:
- EP-A1- 0 832 729
- EP-A1- 0 924 045
- EP-A1- 1 938 945
- WO-A1-00/37231
- WO-A1-00/43187
- WO-A1-96/27489
- WO-A1-03/031146
- WO-A1-2008/004968
- DE-A1- 10 321 355
- DE-A1-102008 028 577
- DE-C1- 10 231 093
- DE-U1-202006 012 676
- GB-A- 2 158 766
- JP-A- 7 144 347
- JP-A- 7 251 428
- JP-A- 2010 094 937
- US-A- 5 670 190
- US-A- 5 948 450
- US-A1- 2003 068 404
- US-A1- 2006 082 031
- US-A1- 2008 152 752
- "Ewikon - Heisskanalforum mit Produktpremiere" PLASTVERARBEITER, HUETHIG GMBH, HEIDELBERG, DE, 22. Mai 2006 (2006-05-22), Seite 1, XP002438954 ISSN: 0032-1338

## Beschreibung

Die Erfindung betrifft eine Heißkanaldüse zur Seitenanspritzung nach dem Oberbegriff der Ansprüche 1 und 4.

Zum technologischen Hintergrund seien die WO 99/37 461 A1, die US2002/0098262 A1 sowie die EP 0186 413 A2 und die US 2003/0068404 A1 genannt.

In der Kunststoff-Spritzgießtechnik ist es oft von Vorteil, Kunststoffteile seitlich, d.h. senkrecht oder schräg zur Entformungsrichtung anzuspritzen. Dazu werden sogenannte Heißkanaldüsen zur Seitenanspritzung, auch Seitenanspritzdüsen genannt, verwendet, die einen Düsenkörper und Spitzenelemente aufweisen. Um eine gute Temperaturführung für die Schmelze bis auf Artikeloberflächen zu erreichen, sind die Düsenspitzen bzw. die Spitzenelemente bis auf die Artikeloberfläche zu führen.

Es ist ferner bekannt und üblich, Formbauteile (Werkzeugbauteile), welche die Düsenkörper umschließen, zu teilen, damit bei Mehrkavitätenanordnungen die Düsenspitzen bzw. der Düsenkörper montierbar ist. Einen derartigen Stand der Technik zeigt die DE 100 08 471 A1. Die Teilung ist nachteilig, weil eine aufwändige Konstruktion des Formwerkzeuges für die notwendigen Zuhaltekräfte sorgen muss, um Leckagen zu verhindern.

Daher erscheinen Konstruktionen von Seitenanspritzdüsen mit Spitzenelementen günstig, die es ermöglichen, ungeteilte Einsätze zu verwenden. Dies kann z.B. mit einstellbaren Spitzenelementen - wie in der DE 197 42 099 A1 vorgeschlagen - geschehen, oder mit Hilfe eines nachträglichen Montierens der Spitzen in einen einteiligen Düsenkörper, nachdem der Düsenkörper montiert ist (siehe z.B. die EP 1524091 A2 und die DE 103 45 578 A1). Bei den in engen Passungen gelagerten Spitzenelementen werden die Passungsspalte allerdings nach einer Zeit des Gebrauchs von verbranntem Kunststoff so fest gehalten, dass eine zerstörungsfreie Demontage oft nicht möglich ist. Nachteile des Verstellmechanismus sind die filigranen Bauteile, die zum Teil schmelzebenetzt werden und nach längerem Gebrauch keine zuverlässige Verstellung bzw. Demontage der Spitzen mehr erlauben. Die Verstelleinrichtungen lassen oft keine hohe Kraft/Druckbelastung zu, weil sie wegen dem begrenzten Bauraum nicht genügend Druckfläche aufzeigen.

Die in den einteiligen Düsenkörper montierbaren Spitzenelemente müssen dagegen in der Regel sehr klein ausgeführt werden, um montierbar zu bleiben. Zudem ist die Montage/Demontage bei bekannten Systemen äußerst schwierig und bei längerem Gebrauch oft nur mit der Zerstörung der Spitzen zu erreichen.

Aus der EP 0 447 573 A1 und der hierzu prioritätsbegründenden DE 90 03 574 ist es daher bekannt, den Düsenkörper an sich nicht einteilig sondern geteilt auszubilden, so dass diese Schwierigkeit verringert wird. Auf eine Art Basisteil (Fig. 1 der EP 0 447 573 A1) ist ein Haltering aufgesetzt, an dessen Axialseite wiederum Leitspitzen mit einem Klemmring gehalten sind. Die Montage und die Demontage der Spitzenelemente gestalten sich allerdings nach wie vor nicht einfach genug. Zudem wird der Schmelzefluss auch nicht leckagefrei vom Schmelzeeintritt in den Düsenkörper bis zum Anschnitt am Artikel geführt, denn die Schmelze kann auch axial aus dem Basisteil austreten und die Leitspitzen umströmen. Bei der Demontage der Spitzenelemente durch die umgebende erstarrte Kunststoffmasse können daher erhebliche Beschwernisse auftreten. Die erstarrte Kunststoffmasse muß zunächst mühsam entfernt werden, alternativ kann die heiße Düse mit noch teigigem Kunststoff demontiert werden.

Eine Lösung der vorstehenden Probleme schafft die DE 20 2008 005 073, welche ausgehend von einem Konzept eines geteilten Düsenkörper den vorstehend genannten Stand der Technik derart weiterentwickelt, dass es möglich ist, auch relativ groß bauende Spitzenelemente in den Düsenkörper auf einfache Weise unterbringen zu können sowie diese einfach montieren und auch nach längerem Gebrauch wieder demontieren zu können. Ein wesentlicher Vorteil dieser Düsen ist somit, dass der Spitzeneinsatz durch eine Schwenkbewegung von der Trennebene des Formwerkzeugs aus eingebaut werden kann. Dabei erreicht die wenigstens eine Spitze eines Spitzenelementes leicht die Oberfläche des zu spritzenden Artikels und nach einer Komplettmontage aller Bauteile wird der Schmelzefluss leckagefrei vom Schmelzeeintritt in den Düsenkörper bis zum Anschnitt am Artikel geführt. Es lassen sich durch die gewählte Ausgestaltung des Düsenkörpers relativ große Zuhaltekräfte realisieren, so dass eine hohe Dichtigkeit erreicht wird. Nach der Montage der Spitzeneinsätze liegen nach einer besonders bevorzugten Variante die Dichthülsen an der Wand des Werkzeugeinsatzes an, bzw. sind so weit beabstandet, dass nach Erreichen der Betriebstemperatur, durch die thermische Ausdehnung der Gesamtdüse, eine hinreichende Flächenpressung zwischen der Dichthülse und der Wandung des Werkzeugeinsatzes entsteht.

Einen gattungsgemäßen Stand der Technik offenbaren jeweils die DE10 2008 028577 A1 und die US 2006/082031.

Die Erfindung setzt ausgehend von dieser Lösung bei der Aufgabe an, die aus der DE 20 2008 005 073 bekannten Konstruktionen auf konstruktiv einfache Weise derart weiter zu entwickeln, dass ihr Einsatzspektrum erweitert wird.

Die Erfindung löst diese Aufgabe durch den Gegenstände der Ansprüche 1 und 4.

Vorteilhafte Ausgestaltungen der Erfindung sind den Unteransprüchen zu entnehmen.

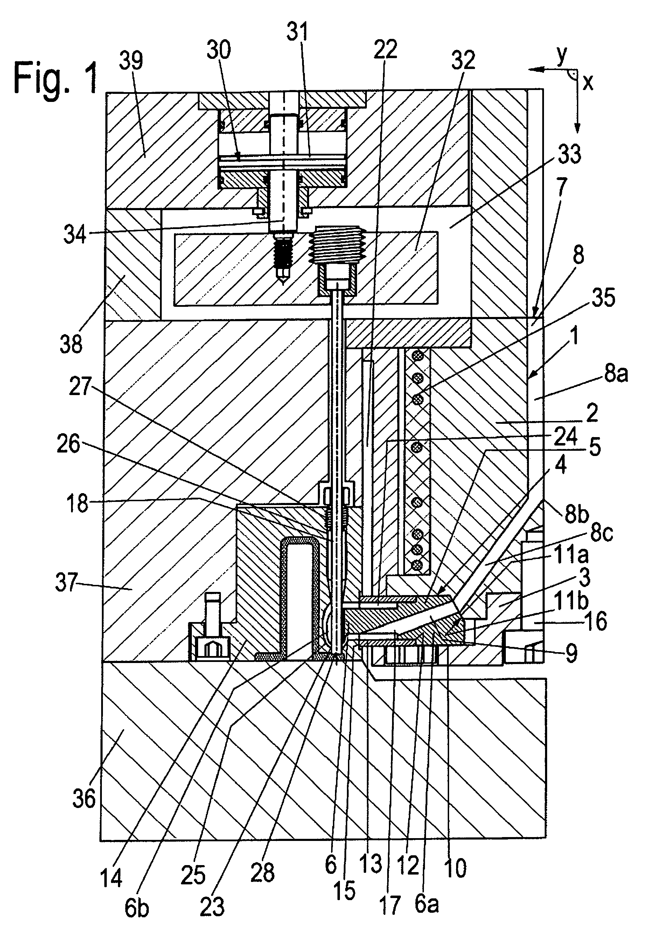

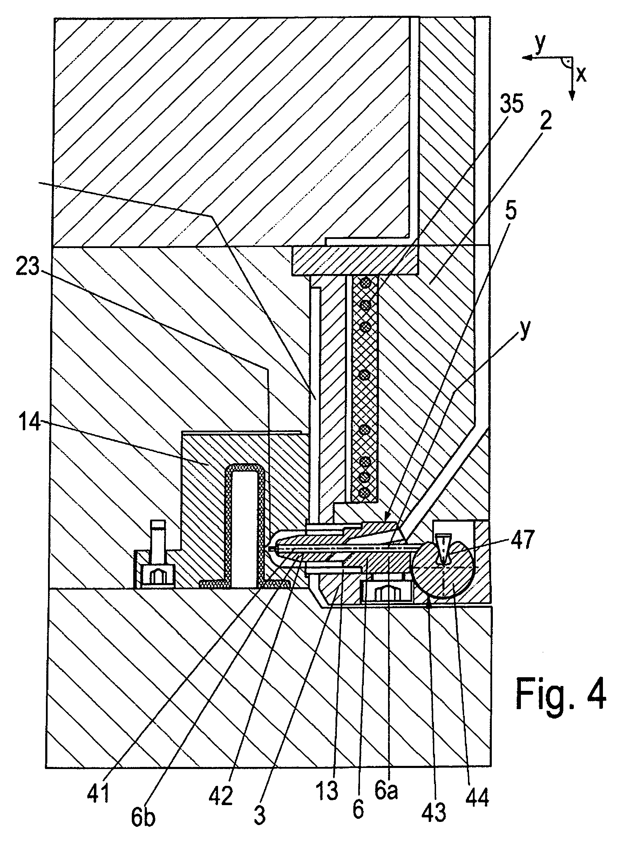

Erfindungsgemäß werden die Konzepte der DE 20 2008 005 073 zu Nadelverschlusssystemen weiter entwickelt. Diese Nadelverschlusssysteme ermöglichen zum einen bei der so genannten 0-Grad Spitzen-Version (Fig. 1) Anspritzpositionen sehr nahe an aufsteigenden Konturen, welche bis heute mit einer direkten Heißkanalanspritzung nicht erreicht wurden. Zum anderen wird bei einer 90-Grad Spitzen-Version (Fig. 4) der ohnehin durch den Abschervorgang beim Entformen der Artikel schon sehr gute Anschnitt zu einem völlig partikelfreien Anschnitt weiterentwickelt.

Darüber hinaus wird eine besonders vorteilhafte Düsenhalterung geschaffen.

Anzumerken ist, dass es aus dem Stand der Technik - so aus der EP 1380 400 A1-prinzipiell bekannt ist, Spitzenelemente mit Verschlussnadeln zu durchsetzen. Die in dieser Schrift gezeigte Lösung erlaubt aber nicht die Herstellung von Gegenständen, bei welchen die Entformungsrichtung mit der Einspritzrichtung übereinstimmt. Zudem weist die in der EP 1 380 400 gezeigte Lösung auch einen relativ komplizierten Antrieb auf, der lediglich für zylindrische Heißkanaldüsen geeignet ist. Auch diese Nachteile beheben die vorliegenden Erfindungen mit einfachen konstruktiven Mitteln.

Die Lösungen der dargestellten Figuren eignen sich besonders vorteilhaft für die in den folgenden Figuren dargestellten Düsenkörper und Spitzeneinsätze, da diese besonders vorteilhaft demontierbar sind. Ihr Einsatz ist aber nicht auf diese Art der Spitzeneinsätze beschränkt. Insbesondere die Verschlussnadeln der Fig. 1 lassen sich vielmehr auch bei Düsenkörpern mit anders gestalteten Spitzenelementen einsetzen, sofern diese mit einem gabelartigen Kopf ausgestattet sind, welcher über den Außenmantel der Düsenkörper nach außen vorsteht.

Nachfolgend wird die Erfindung anhand eines Ausführungsbeispiels unter Bezug auf die Zeichnung näher erläutert. Es zeigen:
- Fig. 1: einen Schnitt einer ersten Heißkanalvorrichtung mit einer in ein Werkzeug eingesetzten Heißkanaldüse mit einem mehrteiligen Düsenkörper mit darin eingesetzten Spitzeneinsätzen und einer Verschlussnadel nebst einer Antriebsvorrichtung für die Verschlussnadel;
- Fig. 2a, b: eine perspektivische Ansicht eines Spitzeneinsatzes und einen Schnitt durch den Spitzeneinsatz;
- Fig. 3a, b: eine Draufsicht auf einen Spitzeneinsatz mit einer Verschlussnadel und einen Schnitt durch diese Elemente;
- Fig. 4: einen Schnitt einer weiteren Heißkanalvorrichtung mit einer in ein Formwerkzeug eingesetzten Heißkanaldüse mit einem mehrteiligen Düsenkörper mit darin eingesetzten Spitzeneinsätzen und einer Verschlussnadel nebst einer Antriebsvorrichtung für die Verschlussnadel;
- Fig. 5: die Anordnung aus Fig. 4 in einer zweiten Betriebsstellung sowie zusätzliche Antriebselemente;
- Fig. 6: einen Schnitt durch einen Spitzeneinsatz der in Fig. 4 gezeigten Vorrichtung mit einer Verschlussnadel und einem Antriebselement;
- Fig. 7: eine perspektivische Ansicht einer Anordnung nach Art der Fig. 5 und 6;
- Fig. 8: eine perspektivische Ansicht einer weiteren Heißkanaldüse nebst einer Halterung in noch nicht am Düsenkörper montierter Stellung;
- Fig. 9: die Anordnung aus Fig. 8 mit der an dem Düsenkörpers angeordneten Halterung; und
- Fig. 10: die Anordnung aus Fig. 8 in einem in ein Formwerkzeug eingesetzten Zustand.

Fig. 1 zeigt abschnittsweise eine Heißkanalvorrichtung mit einer Heißkanaldüse 1, die für ein seitliches Anspritzen von Kunststoffbauteilen ausgelegt ist. Hier ist dieses Kunststoffbauteil beispielhaft als eine zylindrische Hülse mit einem Flansch ausgebildet.

Dieses Kunststoffbauteil wird in einer Form (nachfolgend auch Formwerkzeug genannt) gespritzt, von welcher hier u.a. eine Formplatte 14 dargestellt ist, die eine Anschnittsbohrung 23 aufweist. Die Anschnittsbohrung 23 für den Kunststoff ist von einer Verschlussnadel 18 verschließbar, welche in der geschlossenen Stellung der Fig. 1 die Anschnittsbohrung 23 der Formplatte 14 dicht verschließt, so dass kein Kunststoff mehr in die Form eintreten kann.

Die beheizte Heißkanaldüse 1 weist einen mehrteiligen Düsenkörper mit einem von einer Heizung 35 umgebenen Düsenkörper-Basisabschnitt 2 und einem Düsenkörper-Klemmscheibenabschnitt 3 auf.

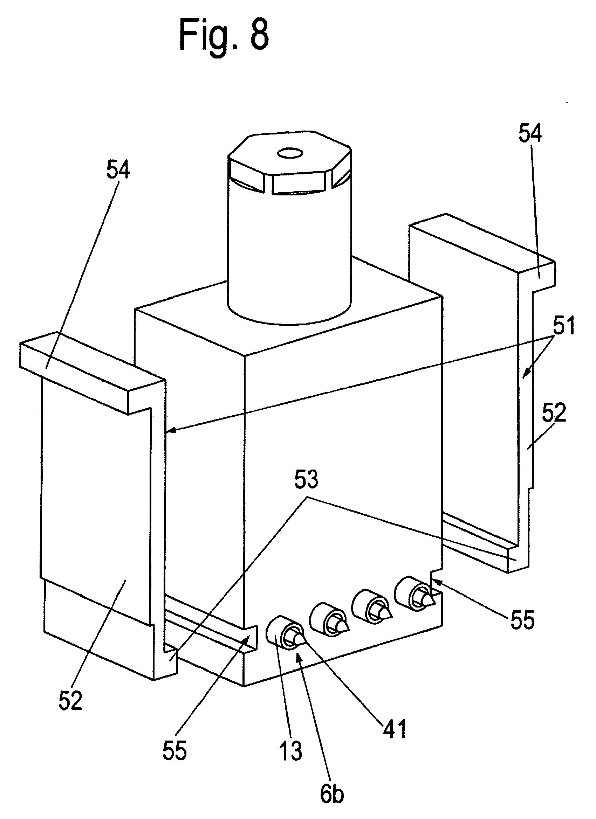

Diese beiden Elemente können - siehe hierzu auch die DE 20 2008 005 073 - einen zylindrischen Außenmantel aufweisen. Der Außenmantel könnte aber auch einen nichtkreisrunden Querschnitt aufweisen, so beispielsweise einen elliptischen, ovalen oder mehreckigen Querschnitt (siehe Fig. 8 bis 10).

Der Düsenkörper-Basisabschnitt 2 weist eine Axialseite auf, die mit wenigstens einer oder mehreren hier beispielhaft radial an der Axialseite umfangsverteilt angeordneten Ausnehmungen 4 zum Anordnen und zur Aufnahme von Spitzeneinsätzen 5 versehen ist. Diese Spitzeneinsätze 5 weisen hier Spitzenelemente 6 und Dichthülsen 13 auf. Korrespondierende Ausnehmungen 10 sind im Düsenkörper-Klemmscheibenabschnitt 3 ausgebildet.

Die nachfolgende Beschreibung ist beispielhaft und nicht einschränkend zu verstehen, wenn die Lage von jeweils nur einem oder an anderen Stellen mehreren der Spitzeneinsätze 5 beschrieben ist, versteht sich, dass diese Merkmale jeweils auch bei mehreren Spitzeneinsätzen 5 vorhanden sein können.

Auch Begriffe wie "oben" oder "unten" sind nicht einschränkend zu verstehen sondern beziehen sich lediglich auf die jeweilige Anordnung und Ausrichtung in den Figuren.

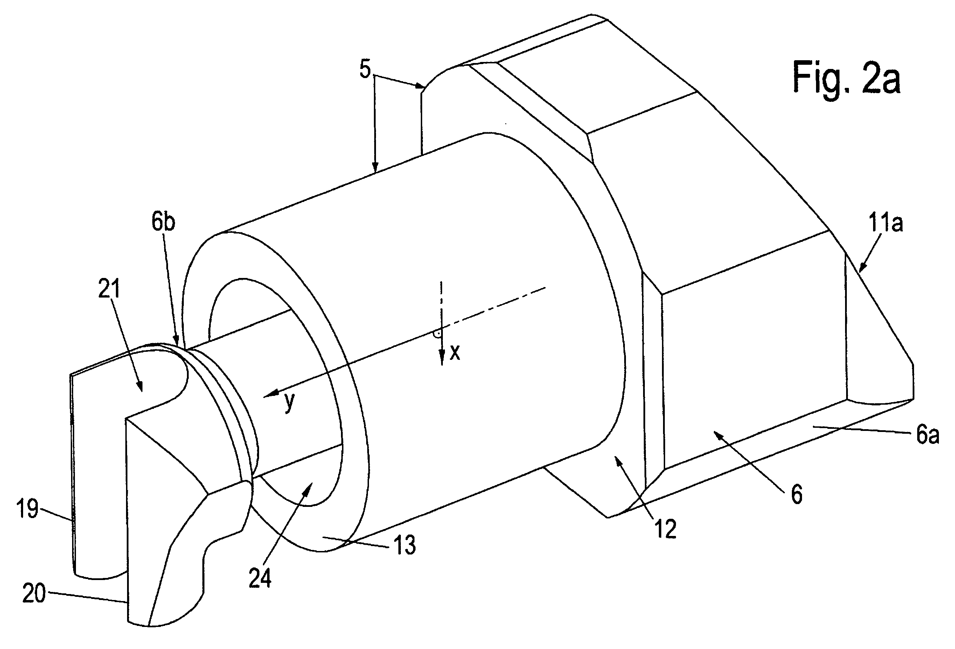

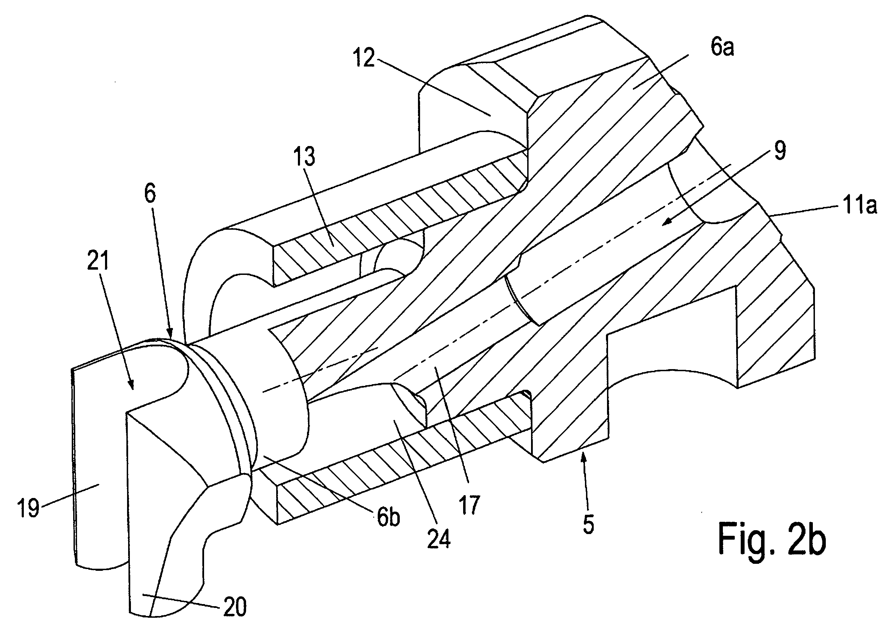

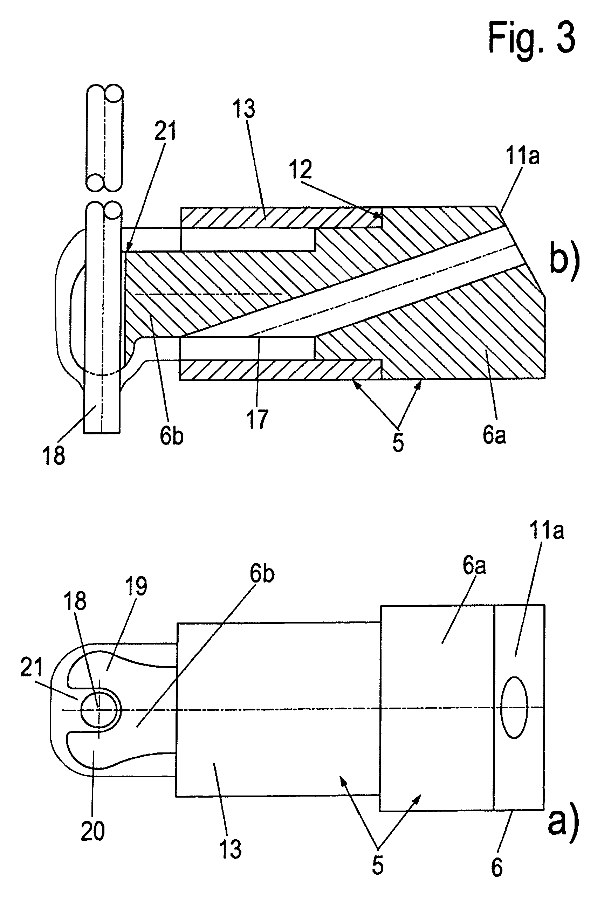

In den Ausnehmungen 4, 10 ist jeweils einer der Spitzeneinsätze 5 angeordnet. Die Spitzenelemente 6 (siehe auch Fig. 2 und 3) weisen jeweils einen Grundkörper 6a auf, an den sich jeweils ein Spitzenabschnitt 6b anschließt, der nach Fig. 1 in einem ersten Bereich zylindrisch und am äußersten Ende gabelförmig gestaltet ist.

An seiner vom Düsenkörper-Klemmscheibenabschnitt 3 abgewandten - in Fig. 1 oberen - Axialseite weist der Düsenkörper-Basisabschnitt 2 eine SchmelzeEintrittsöffnung 7 in einen Schmelzekanal 8 (siehe Fig. 1) auf.

Nach Fig. 1 erstreckt sich dieser Schmelzekanal 8 zunächst über einen ersten Abschnitt 8a axial in X-Richtung durch den Düsenkörper-Basisabschnitt 2 bis zu einer Verzweigung 8b, von der hier strahlenartig Teilkanäle 8c abzweigen, welche jeweils in die Ausnehmungen 4 münden.

Dabei fluchten die Teilkanäle 8c mit Schmelzekanälen 9 in den Spitzenelementen 6, welche in die Ausnehmungen 4 eingelegt sind, wobei die Schmelzekanäle 9 die Spitzenelemente 6 bohrungsartig vollständig durchsetzen, und zwar hier schräg zur Richtung X, in welcher die Schmelzekanäle 8 in dem Abschnitt 8a verlaufen.

Der an seinem äußersten Ende eine Gabel ausbildende Spitzenabschnitt 6b des Spitzenelements 6 zeigt im montierten Zustand am Düsenkörper-Basisabschnitt 2 (hier radial) nach außen und steht in noch näher zu beschreibender Weise über den Umfangsrand des Düsenkörper-Basisabschnitts 2 nach außen vor.

Die Spitzeneinsätze 5 sind derart ausgestaltet, dass sie nach einem Einlegen in die Ausnehmungen 4 durch die korrespondierenden Ausnehmungen 10 des nachfolgend montierten Düsenkörper-Klemmscheibenabschnittes 3 fest gehalten sind.

Die Spitzeneinsätze 5 stützen sich im Bereich des Grundkörpers 6a jeweils an ihren von dem Spitzenabschnitt 6b jeweils abgewandten Bereichen mit einer Schrägfläche 11a rückwärtig an einer Schrägfläche 11b des Düsenkörper-Basisabschnitts 2 ab. Die miteinander fluchtenden Schmelzekanäle 8, 9 durchsetzen diese Schrägflächen 11a, 11b.

Der Grundkörper 6a der Spitzeneinsätze 5 weist Abschnitte verschiedenen Durchmessers auf. Insbesondere ist in axialer Richtung ein umlaufender Anlagebund 12 ausgebildet.

Auf jedes Spitzenelement 6 ist hier eine Dichthülse 13 aufgeschoben, die sich auf ihrer einen Seite axial an dem Anlagebund 12 abstützt und auf ihrer anderen axialen Seite an einer Anlagefläche 15 eines Formwerkzeuges 14, in welches die Heißkanaldüse 1 eingesetzt ist.

Der Düsenkörper-Klemmscheibenabschnitt 3 ist am Düsen-Körperbasisabschnitt 2 mit einer oder mehreren Schrauben fixierbar (insbesondere im Bereich einer gestuften Schraubbohrung 16, welche diese beiden Elemente fluchtend durchsetzt).

Der axial zum Düsenkörper-Basisabschnitt 2 ausgerichtete Düsenkörper-Klemmscheibenabschnitt 3 fixiert dabei die Spitzeneinsätze 5 kraft- und formschlüssig an dem Düsenkörper-Basisabschnitt 2.

Zwischen den Schrägflächen 11a, 11b und dem Abstützbereich der Dichthülse 13 am Formwerkzeug 14 wird zudem auch an diesem eine stabile, dichte Abstützung realisiert.

Die Dichthülse 13 begrenzt zudem derart in einfacher Weise den Bereich, welchen die Schmelze beim Durchtreten des Düsenkörpers bis vor die Anschnittsbohrung 23 durchfließen kann bzw. durchfließt.

Als besonders vorteilhaft sind ferner die leichte Montierbarkeit und Demontierbarkeit der Anordnung zu erwähnen.

Der wenigstens eine Schmelzeleitkanal 9 weist eine Austrittsöffnung 17 in einen ringraumartigen Zuleitungsraum 24 auf, welcher den Spitzenabschnitt 6b - der über einen Teil seiner Länge eine zylindrische Form aufweist, bevor er in die eigentliche Gabel an seiner Spitz übergeht - umgibt (Fig. 1 und 2 sowie 3), der ferner nach außen hin von der vom Spitzenabschnitt bis auf die Anlage an der axialen Anlagefläche 15 beabstandeten Dichthülse 13 begrenzt ist und der sich bis in das Formwerkzeug 14 erstreckt, wo er in der Eintrittsöffnung/Anschnittsbohrung 23 in dem Formwerkzeug - hier in einer Formplatte 14 - mündet.

Erfindungsgemäß wird vorzugsweise jedes Spitzenelement 6 jedes Spitzeneinsatzes 5 in einer noch zu beschreibenden Weise von der beweglichen Verschlussnadel 18 durchsetzt, der ein Antrieb 30 zugeordnet ist, welcher direkt oder vorzugsweise über eines oder mehrere Zwischenelemente 32 mit der Verschlussnadel 18 in Wirkverbindung steht.

Nach Fig. 1,2,3 wird das Merkmal des "Durchsetzens" des Spitzeneinsatzes 5 von der Verschlussnadel 18 dadurch realisiert, dass die Verschlussnadel 18 den gabelförmigen Spitzenabschnitt 6 durchsetzt.

Der gabelförmige Spitzenabschnitt 6b wird von zwei Gabelstegen 19, 20 begrenzt, zwischen welchen ein Spalt 21 besteht, der den Spitzenabschnitt nach Fig. 1 in X-Richtung durchsetzt (Fig. 1, 2, 3).

Die Gabelstege 19, 20 sind an den Spitzeneinsätzen 5 in dem Bereich ausgebildet, welcher nach außen über den Umfangsrand des Düsenkörpers 2 und der Dichthülse 13 vorsteht, d.h., die Gabelstege 19, 20 sind in dem Zuleitungsraum 24 in der Formplatte 14 ausgebildet. Sie sind nach unten hin in X-Richtung gerichtet (siehe auch Fig. 2 und 3), um das fließende Kunststoffmaterial in die Eintrittsöffnung/Anschnittsbohrung 23 zu leiten. Die Gabelstege 19, 20 sind derart gestaltet, dass sie den Wärmestrom vom Düsenkörperbasisabschnitt 2 kommend über das Spitzenelement 6 in X-Richtung der Verschlussnadel sowie in Richtung des Anschnitts 23 leiten.

Den Spalt 21 durchsetzt die sich in X-Richtung erstreckende Verschlussnadel 18, ohne dabei den Spitzenabschnitt 6b bzw. die Gabelstege 19, 20 zu berühren.

Hierdurch kommt die Verschlussnadel 18 in vorteilhafter Weise nicht mit den heißeren Teilen der Heißkanaldüse - also insbesondere den Elementen 2, 3, 5 - in Berührung.

Der Zuleitungsraum 24 setzt sich in der Formplatte 14 zu einem Ansatzraum 25 fort, welcher sich in X- Richtung nach unten hin erstreckt und an dessen unteren Ende die Eintrittsöffnung/Anschnittsbohrung 23 ausgebildet ist, die sich ebenfalls in X-Richtung erstreckt. In dieser Richtung ist auch die Verschlussnadel 18 ausgerichtet und beweglich. Ihre Achse liegt damit senkrecht zur Hauptachse Y der Spitzenelemente (bezogen auf die Achse Y des zylindrischen Bereichs des Spitzenabschnittes 6b; siehe Fig. 2).

Die Verschlussnadel 18 ist derart ausgelegt, dass sie in einer ersten - in Fig. 1 dargestellten Position - die Anschnittsbohrung 23 verschließt, welche in der Formplatte 14 ausgebildet ist.

Die Verschlussnadel 18 ist aus dieser Position der Fig. 1 mit Hilfe des Antriebs in eine zweite Position bewegbar, in der sie die Anschnittsbohrung 23 in der Formplatte 14 derart frei gibt, dass geschmolzener Kunststoff durch die Schmelzekanäle 8, 9 und den Zuleitungsraum 24 und den Ansatzraum 25 sowie die Anschnittsbohrung 23 in den zu füllenden Hohlraum in der Formplatte 14 des Formwerkzeugs fließen kann.

Die Verschlussnadel 18 wird vorzugsweise nur in der kälteren Formplatte 14 geführt, beispielsweise mit einer Hülse 27, die in eine Bohrung 26 in der Formplatte 14 oder in ein sonstiges Teil des kühlen Formwerkzeugs eingesetzt ist.

Zwischen der Formplatte 14 und der Heizung 35 bzw. der eigentlichen Heißkanaldüse ist ein Spalt 22 ausgebildet, um den wärmeren bzw. heißen Bereich vom kälteren Bereich der umgebenden Formplatte zu trennen. In dem Spalt 22 können eine oder vorzugsweise zwei weiter unten noch näher zu beschreibende Düsenkörper-Halterungen 51 eingesetzt sein (siehe Fig. 8 bis 10), welche die Heißkanaldüse 1 in kühlerer Umgebung halten und fixieren.

An ihrer von der eigentlichen Spitze 28 - welche die Eintrittsöffnung 23 in der Stellung der Fig. 1 dicht verschließt - abgewandten Seite ist die Verschlussnadel 18 an einer Hubplatte 32 befestigt, welche in einem Hubraum 33 des Werkzeugs in X-Richtung hin- und her beweglich ist.

Dieses Bewegen erfolgt mit Hilfe eines fluidbetätigbaren Antriebszylinders 30, der einen beweglichen Kolben 31 mit einer Kolbenstange 34 aufweist, die an ihrer von der Verschlussnadel 18 abgewandten Seite an der Hubplatte 32 festgelegt (z.B. festgeschraubt) ist.

Es ist ohne weiteres möglich, auch mehrere der Verschlussnadeln 18 an der Hubplatte 32 zu befestigen und die Hubplatte 32 dennoch mit nur einem Antrieb bzw. hier mit nur einem einzigen Kolben zu bewegen.

Die Hubplatte 32 kann als Ringscheibe ausgebildet sein, welche einen zylindrischen Düsenkörper 1 umgibt. Sie kann aber als rechteckige Platte ausgebildet sein und an einer Seite eines rechteckigen Düsenkörpers 1 nach Art der Fig. 8 bis 10 verlaufen.

Das vorstehend beschriebene Heißkanalsystem bietet eine ganze Reihe bemerkenswerter Vorteile gegenüber dem eingangs beschriebenen Stand der Technik.

Nach Fig. 1 sind die Anspritzrichtung und die Entformungsrichtung beim Kunststoffspritzgießen gleich (sie liegen hier beide in der X-Richtung, denn die Formplatt 36 wird in X-Richtung gelöst, um das fertig gespritzte Kunststoffteil aus der Form zu lösen).

Ist dies der Fall, besteht nach dem Stand der Technik die Gefahr hoher Anschnittsabrisse oder des so genannten Fadenzugs.

Ein hoher Abriss kann aus unterschiedlichen Gründen wie zum Beispiel einer Verletzungsgefahr nicht akzeptiert werden. Sich ablösende Fäden kontaminieren zudem u.U. die gespritzten Kunststoff-Artikel, was zum Beispiel für Artikel der Medizintechnik ungeeignet bzw. sogar völlig unzulässig ist.

Der Aufbau einer Heißkanaldirektanspritzung mit einem Nadelverschlusssystem auf der Rückseite eines Flansches, z.B. auf der Rückseite der Griffplatte eines medizinischen Spritzenkörpers, stellte eine bis heute ungelöste Aufgabe dar.

Ein solcher Körper kann aber mit der in Fig. 1 dargestellten Erfindung überraschend doch gefertigt werden, ohne dass eine Abrissgefahr oder eine Gefahr zur Fadenbildung besteht. Diesem Effekt wird mit dem hier dargestellten Nadelverschlusssystem effektiv entgegengewirkt.

Geschaffen werden hierzu die Spitzenelemente 6 mit einer gabelförmigen Spitze, die anstelle eines spitz zulaufenden - ggf. auch abgewinkelten Spitzenfortsatzes - zwei Fortsätze - die zwei Gabelstege 19, 20 aufweist, die nicht bis zur Artikeloberfläche führen und gabelartig die hindurch tauchende Verschlussnadel 18 (nicht berührend) umschließen.

Dabei wird vorzugsweise nach Art der Fig. 1 durch die Gabelform nach wie vor sicher gestellt, dass die Spitzeneinsätze 5 auch im eingebauten Zustand der Verschlussnadeln 18 montiert und demontiert werden können.

Der Antrieb der Verschlussnadeln 18 wird vorzugsweise wie beschrieben durch eine pneumatisch oder fluidisch betriebene Hubplatte 32 realisiert, kann aber prinzipiell auch auf andere Weise erfolgen.

Die Hubplatte 32 ist aber der bevorzugte Antrieb, weil die Spitzeneinsätze in der Regel sehr eng beieinander stehen und daher Einzelantriebe nicht möglich sind.

Grundsätzlich ist auch das gleichzeitige Öffnen der Anschnittsbohrungen bzw. Eintrittsöffnungen 23 durch die Hubplattentechnik vorteilhaft, weil damit eine hohe Prozesssicherheit erreicht wird.

Die eigentliche Form ist mehrteilig. Sie besteht aus der bereits erwähnten Formplatte 14 und dem korrespondierenden Formkern, welche hier derart ausgebildet sind, dass ein zylindrischer Körper mit einem Bund gespritzt werden kann. Daneben sind auch weitere Formwerkzeugteile 36, 37, 38, 39 vorgesehen, in welche die Teile der Form eingesetzt sind und/oder welche die eigentliche Heißkanaldüse über die Halterung 51 halten.

Selbstverständlich können in der Formplatte 14 mehrere derartige Gegenstände gleichzeitig gespritzt werden, wenn sie entsprechend ausgestaltet wird.

Die Hülse 27 als Nadeldichtung ist in dem gekühlten Formwerkzeug 14 eingebaut und wirkt daher besonders gegen das Austreten der unter hohem Druck stehenden Schmelze während des Einspritzvorgangs, da die Kunststoffschmelze in dem Spalt zwischen Nadel 18 und der Bohrung der Hülse erstarren kann.

Nachfolgend sei nunmehr eine weitere Variante der Erfindung beschrieben.

Der grundsätzliche Aufbau der Anordnung entspricht zunächst insbesondere auch in Hinsicht auf die Ausgestaltung des Düsenkörpers 1 und der Festlegung und Abstützung der Spitzeneinsätze 5 mit den Dichthülsen 13 und den Spitzenelementen 6 dem der Fig. 1.

Allerdings weisen die Spitzeelemente 6 nach Fig. 4 jeweils keine Spitzenabschnitte 6b auf, an denen Gabelstege 19, 20 ausgebildet sind. Das Spitzenelement 6 steht vielmehr nach außen über den Rand des vorzugsweise im Querschnitt rechteckigen Düsenkörpers senkrecht zur X-Achse nach außen vor und mündet in einer sich nach außen hin konisch zulaufenden, nadeldurchsetzten Spitze, welche in Richtung einer hier ebenfalls senkrecht nach außen in Y-Richtung (d.h. in Richtung der Hauptachse der Spitzenabschnitt 6b) nach außen senkrecht zur X-Richtung gerichteten Eintrittsöffnung/Anschnittsbohrung 23 zeigen bzw. gerichtet sind.

Die Spitzenelemente 6 sind zudem in Y-Richtung von Verschlussnadeln 41 durchsetzt. Sie weisen hierzu eine axiale Bohrung 42 auf, welche die Spitzeneinsätze 5 vollständig senkrecht zur X-Richtung durchsetzen.

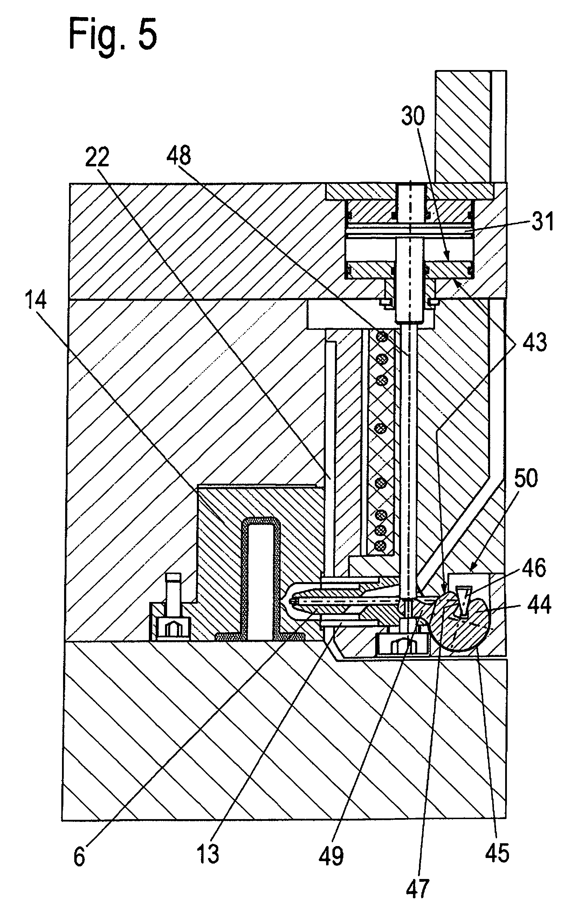

Die Verschlussnadeln 41 sind senkrecht zur X-Richtung beweglich. Sie sind wiederum mit Hilfe eines Antriebes 43 beweglich, um sie in eine Stellung bewegen zu können, in welcher sie die Anschnittsbohrung/Eintrittsöffnung 23 in die Formplatte 14 verschließen (nahezu erreicht in Fig. 4) und in die zweite Stellung der Fig. 5, in welcher sie diese freigeben, so dass Kunststoff in die Kavität in der Formplatte 14 (gekreuzte Schraffur) fließen kann, in welcher sich der jeweils zu spritzende Gegenstand ausbilden soll.

Als besonders vorteilhaft zu erwähnen ist neben der erneut besonders hervorzuhebenden Montierbarkeit und Demontierbarkeit der Antrieb, welcher in Fig. 4 und 5 dargestellt ist.

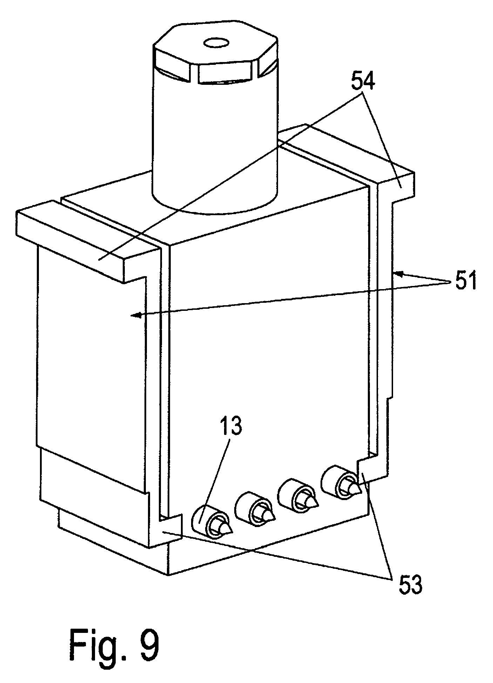

Dieser Antrieb ist insbesondere für eine Anordnung nach Art der Fig. 9 geeignet, wonach der Düsenkörper einen rechteckigen Querschnitt aufweist und wo an einer oder zwei gegenüberliegenden Seiten jeweils die Spitzeneinsätze 5 in einer Reihe angeordnet sind.

Der Antrieb weist eine Antriebswelle 44 auf, die in eine sich senkrecht zur Blattebene im Düsenkörper erstreckende, vorzugsweise teilzylindrische, insbesondere halbzylindrische, Ausnehmung 45 im Düsenkörper-Klemmscheibenabschnitt 3 eingelegt ist, die sich senkrecht zur X-Richtung und in Fig. 4 zudem senkrecht zur Blattebene erstreckt.

Die Ausnehmung 45 ist an der zum Düsenkörper-Basisabschnitt 2 gewandten Seite des Düsenkörper-Klemmscheibenabschnittes 3 ausgebildet, so dass die Antriebswelle 44 mit diesem am Düsenkörper-Basisabschnitt 2 fixierbar ist.

Dabei ist die Ausnehmung 45 derart bemessen, dass die Antriebswelle 44 in ihr verschwenkt werden kann.

Die Antriebswelle 44 weist außermittige Kopplungsmittel zur Kopplung der Antriebswelle 44 mit der Verschlussnadel 41 auf.

Nach Fig. 4 werden diese Kopplungsmittel dadurch gebildet/realisiert, dass an dem Ende der Verschlussnadel 41 ein stegartiger Abtriebszahn 46 ausgebildet ist, welcher winklig - hier senkrecht - zur Hauptachse y der Verschlussnadel 41 ausgebildet ist.

Der Abtriebszahn 46 greift nach Art einer Verzahnung mit einem Ende in eine korrespondierende Ausnehmung 47 in der Antriebswelle 44 ein, welche derart ausgestaltet ist, dass die Antriebswelle 44 trotz des Eingriff des keilförmigen Abtriebszahnes 46 in die Antriebswelle 44 um einen vorgegeben Winkel drehbar bzw. verschwenkbar ist (vergleiche Fig. 4 und 5), wobei sie die Verschlussnadel 41 über den Abtriebszahn 46 mit bewegt, so dass sich diese verschiebt, wodurch sie die Anschnittsbohrung 23 öffnet und verschließt. Erreicht werden kann dies dadurch, dass die Wandungen der Ausnehmung bogenförmig derart ausgestaltet sind, dass sie an der Keilfläche des Abtriebszahnes gleiten oder abrollen können.

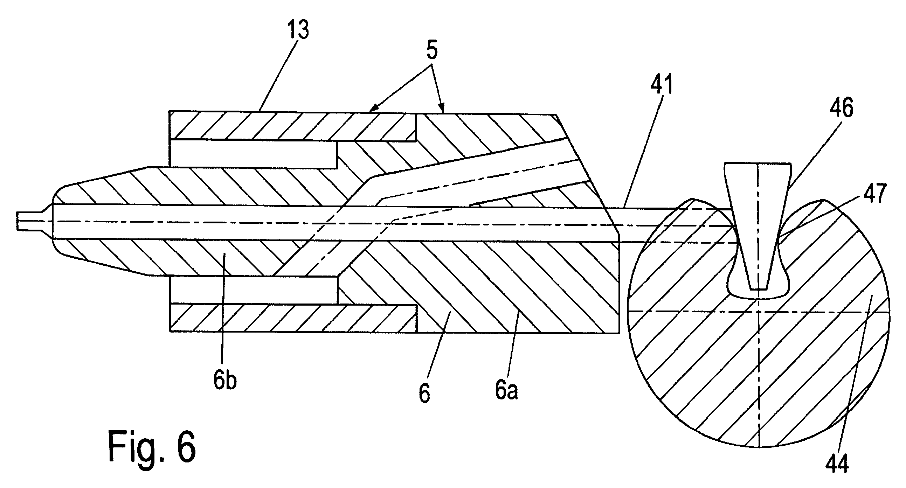

Die Antriebswelle 44 ist über einen sich über ihren Außenumfang erstreckenden Ansatz 49 mit einer Stange 48 gekoppelt, die direkt oder über eine Hubplatte mit einem Kolben 31 eines fluidbetätigten Zylinders 30 gekoppelt ist (siehe Fig. 5, 6 und 7).

Der Düsenkörper-Basisabschnitt 2 weist an seiner zu dem Düsenkörper-Klemmscheibenabschnitt 3 gewandten Seite eine Ausnehmung 50 auf, in welcher sich die Antriebswelle 44 und die Verschlussnadel 41 mit dem Abtriebszahn 46 ungehindert bewegen können und die zumindest abschnittsweise als Lager der Antriebswelle 44 dient.

Die Ausnehmung 47 der Antriebswelle, in welche der Abtriebszahn 46 eingreift, kann nach Art einer Evolventenverzahnung ausgebildet sein; die derart realisierte Kopplungsmechanik bzw. Antriebsmechanik für die Verschlussnadel 41 ist kompakt und dennoch besonders zuverlässig.

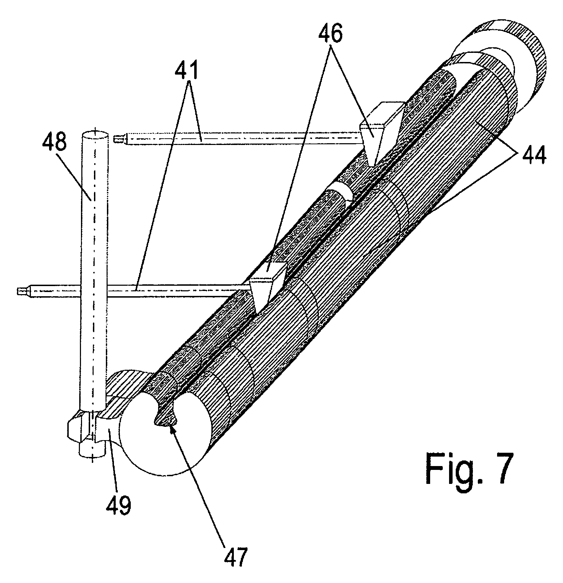

Wie in Fig. 7 zu erkennen, kann sich die Ausnehmung 47 über die gesamte axiale Läng der Antriebswelle erstrecken, so dass es möglich ist, dass in sie mehrere Abtriebszähne 46 eingreifen. Derart können auf besonders einfache Weise mehrere Verschlussnadeln 41 bei einer Linearanordnung von mehreren Spitzeneinsätzen 5 in einer geraden Reihe bewegt werden.

Diese Betätigungswelle 44 ist aber auch als Einfach- oder Zweifachausführung bei Radialversionen denkbar.

Im Fall der bevorzugten Anwendung in Düsen der Linearausführung wird die Betätigungswelle mehrere der Verschlussnadeln 41 gleichzeitig bewegen, dies geht aus Fig. 7 hervor.

Dazu wird mindestens eine der Antriebswellen 44 zum einen in einer Ausnehmung 50 am Düsenkörperbasisabschnitt 2 und zum anderen in der bereits erwähnten Ausnehmung 45 im Düsenkörper-Klemmscheibenabschnitt 3 so geführt, dass eine Axialverschiebung verhindert und eine Drehbewegung in einem hinreichenden Winkelbereich möglich ist, damit die Verschlussnadeln 41 in Offen- und Schließstellung gefahren werden können, vgl. dazu Abb. 4, 5, 6 und 7.

Die Montage des Spitzeneinsatzes 5 (mit der Verschlussnadel 41!) erfolgt wie bei allen anderen genannten Ausführung durch die Schwenkbewegung, danach wird die Betätigungswelle so eingelegt, dass die Ausnehmung in der Antriebswelle 44 alle zahnartigen Nadelköpfe aufnimmt.

Danach wird der Düsenkörper-Klemmscheibenabschnitt 3 aufgeschraubt, der in bekannter Weise die Spitzenelemente bzw. Spitzeneinsätze 5 mit den Dichthülse 13 dichtend anpresst und gleichzeitig als Lagerung und Führung für die Antriebswelle 44 dient.

Auch ein anderer Mechanismus, z.B. bestehend aus einem Zahnrad am Ende der Betätigungswelle und Zahnstange, oder bestehend aus einem Hebelsystem, kann für die hinreichende Drehbewegung von zum Beispiel einem Winkelbereich von 30°, sorgen. Damit der Mechanismus angreifen kann, ist die Betätigungswelle vorzugsweise über die Stirnfläche des Düsenkörpers hinausgeführt (Fig. 7).

Das schwenkende Einbauen bzw. Herauslösen der Spitzeneinsätze 5 ermöglicht wiederum ein Realisieren hinterschnittiger Vorkammergeometrien.

Die vorstehend beschriebene Konstruktion der Fig. 4 bis 7 ist insbesondere vorteilhaft, wenn die Heißkanaldüse rechteckig ist und die Spitzeneinsätze 5 in einer Reihe angeordnet sind, da derart die Betätigungswelle 44 besonders vorteilhaft unterbringbar ist.

Ein Nadelverschluss - wie er auch bei den Lösungen der Fig. 1 bis 7 vorhanden ist - verlangt weiterhin, dass die Verschlussnadeln 18, 41 mit hoher Präzision in die Anschnittsbohrung/Eintrittsöffnung 23 fahren können.

Aus diesem Grund sollte auf der Höhe der Anschnitte in X-Richtung (auf Höhe der d.h. Längsachsen der Nadeln / Spitzen) nahezu keine Verschiebung in Querrichtung eintreten, weil sonst die Verschlussnadeln 41 und die Anschnittsbohrungen 23 nicht mehr fluchten.

Bei einer Festlegung des Düsenkörpers 1 relativ zur Form im oberen Bereich (mit Bezug auf die vorliegenden Zeichnungen) würde dessen thermische Dehnung dazu führen, dass sich die Düsenspitzen bzw. Spitzenelemente 6 und mit ihnen die in ihnen gelagerten Verschlussnadeln 18, 41 verlagern würden, weiterhin die Antriebswellen 44 der Version nach Fig. 4. Letzteres würde zu einer Positionsveränderung der Verschlussnadeln 41 in Längsrichtung führen, da sich das die Antriebswellen 44 antreibende Hebelgestänge nicht mit dehnt und so eine Verlagerung des Arbeitspunktes der Nadel-Antriebsmechanik entstünde.

Das Problem ist einfach durch die angegebene Konstruktion der Fig. 8 bis 10 lösbar:
Die Düse bzw. der Düsenkörper wird dabei so eingebaut, dass die thermische Dehnung von der Achse der Verschlussnadel 41 ausgeht.

Dazu sind zwei spezielle Düsenkörper-Halterungen 51 vorteilhaft, welche in Fig. 8 bis 10 dargestellt sind und welche in ihrer besonders bevorzugten Ausgestaltung in der Seitenansicht eine Z-Form aufweisen. Durch sie wird der Düsenkörper 1 mittels eines ersten Endes der Düsenkörper-Halterung 51 in der Nadelebene gelagert. Das andere Ende der Düsenkörper-Halterung 51 ist jeweils an der kühlen Form gelagert. So bleibt die Nadel-/Düsenspitzenebene trotz thermischer Dehnung des Düsenkörpers 1 relativ zur Form in Ruhe.

Die Düsenkörper-Halterung 51 weist einen Basisschenkel 52 auf und zwei Halteschenkel 53, 54, die an den voneinander abgewandten Enden des Basisschenkels 52 ansetzen und sich von diesem in voneinander abgewandte Richtungen erstrecken, wobei sie mit dem Basisschenkel 52 vorzugsweise einen 90° Winkel einschließen.

Wie in Fig. 8, 9 und 10 zu erkennen, greifen die einen Halteschenkel 53 in korrespondierende nutenartige Ausnehmungen 55 an gegenüberliegenden Außenseiten der Düsenkörper 2, 3 ein, und zwar vorzugsweise in Ausnehmungen 55, welche an den Seiten des Düsenkörpers 1 ausgebildet sind, an denen sich keine Spitzenelemente 5 befinden, und welche in Umfangsrichtung über den Außenumfang des Düsenkörpers 1 - hier des mehrteiligen Düsenkörpers 1 - vorstehen. Die Ausnehmungen können insbesondere im Zusammenspiel der beiden Düsenkörperelemente 2 und 3 ausgebildet werden.

Die anderen Halteschenkel 54 greifen dagegen in Ausnehmungen 56 im Formwerkzeug ein.

Damit dienen die einen Halteschenkel 53 dazu, in den wärmeren Düsenkörper 1 einzugreifen und die anderen Haltesschenkel 54 dazu, in das den Düsenkörper 1 umgebende kühle Formwerkzeug einzugreifen.

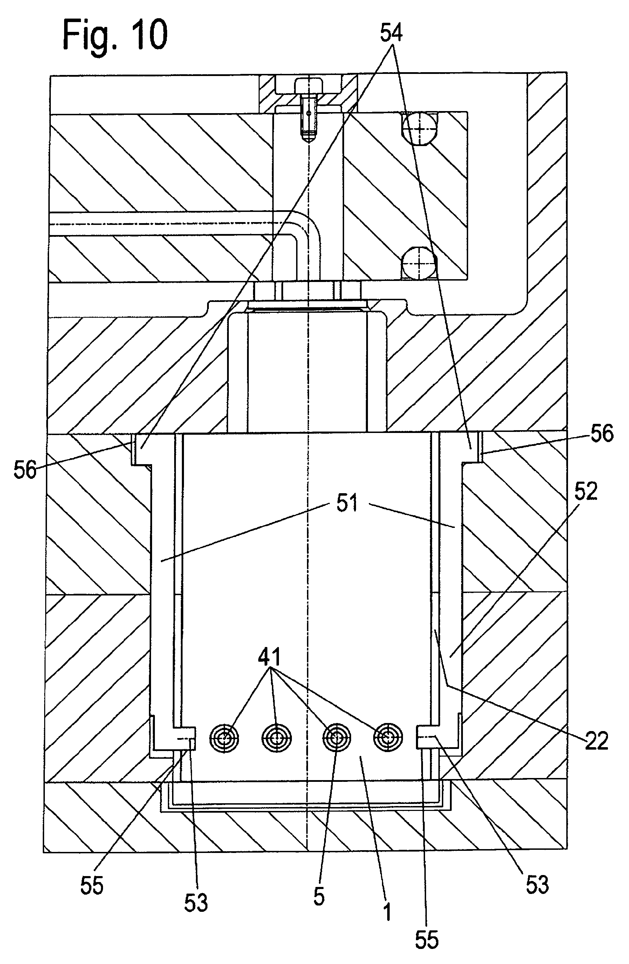

Wie in Fig. 10 zu erkennen, liegt der Bereich der Festlegung in der kühleren Form bzw. im kühleren Formwerkzeug in X-Richtung auf anderer Höhe als der Bereich der Festlegung der Düsenkörper-Halterungen 51 im warmen bzw. heißeren Düsenkörper 1.

Ganz besonders vorteilhaft ist es, wenn die Halteschenkel 53 in der gleichen Höhe in X-Richtung in den Düsenkörper 1 eingreifen, in welcher auch die Spitzeneinsätze aus diesem vorstehen bzw. in der Höhe X, in welcher das heiße Kunststoffmaterial aus dem Düsenkörper 1 im Bereich der Spitzenelemente nach außen tritt. Dabei können der Halteschenkel 53 und die ihn aufnehmende Ausnehmung 55 konisch ausgeführt sein, um einen formschlüssigen Presssitz zu erreichen.

Mit der Konstruktion auf der Stirnseite der Lineardüse löst man weiterhin ein Platzproblem; denn an den Längsseiten des Düsenkörpers 1 treten die Spitzen aus und es müssen die Artikelkonturen sowie die Kühlung vorgesehen werden; dort ist für eine besondere Haltekonstruktion kein Platz.

Die Düsenkörper-Halterung 51 stützt sich mit der oberen Auskragung wie üblich in einer Formwerkzeugplatte ab. Die Ausnehmung für die Düse im Formwerkzeug ist so ausgeführt, dass die gesamte Wange bzw. der Basisschenkel 52 an der temperierten Wand des Formwerkzeugs anliegt, so dass keine relative Dehnung zwischen Düsenhalter 51 und Formwerkzeug entsteht. Durch entsprechende Dimensionierung kann auch die zur Bewirkung des o.g. Presssitzes in Richtung des konischen Halteschenkels 53 gerichtete Anpresskraft erzielt werden.

Genau auf der Höhe der Anschnitte, d.h. der Nadeln, greift der untere Schenkel 53 in die Ausnehmung 55 des Düsenkörpers 1, womit die Düse auf dieser Höhe im Formwerkzeug fixiert ist. Sie kann sich thermisch in Richtung des Verteilers ausdehnen und die Dichtwirkung zwischen Verteiler und Düse erzeugen. Im direkten Kontaktbereich der Düse wird der Düsenhalter eine höhere Temperatur als Formwerkzeugtemperatur annehmen, aber nur lokal begrenzt und nur auf einem Niveau zwischen Düsen- und Werkzeugtemperatur, so dass die daraus resultierende thermische Verschiebung vernachlässigbar klein bleibt.

Die dargestellten Varianten der Fig. 1 bis 3 sowie 4 bis 7 zeigen Anordnungen, bei denen die Anspritzrichtungen und damit die Achsrichtungen der Düsenspitzen entweder in X- oder in Y-Richtung verlaufen, wobei die Achsrichtungen der Verschlussnadeln jeweils mit diesen Richtungen übereinstimmen.

Es ist darüber hinaus möglich, bei weiterhin in X- bzw. Y-Richtung beweglichen Verschlussnadeln die Anspritzrichtung und somit die Richtung der Düsenspitzenachsen um Winkel von bis zu +/- 20° zu variieren, wobei lediglich die Enden der Verschlussnadeln ggf. angeschrägt werden müssen, um der Oberfläche des Artikels zu entsprechen.

**Bezugszeichenliste**

| | |
|---|---|
| Heißkanaldüse | 1 |
| Düsenkörper-Basisabschnitt | 2 |
| Düsenkörper-Klemmscheibenabschnitt | 3 |
| Ausnehmungen | 4 |
| Spitzeneinsätze | 5 |
| Spitzenelement | 6 |
| Grundkörper | 6a |
| Spitzenabschnitt | 6b |
| Schmelzeeintrittsöffnung | 7 |
| Schmelzekanal | 8 |
| erster Abschnitt | 8a |
| Verzweigung | 8b |
| Teilkanäle | 8c |
| Schmelzekanäle | 9 |
| Ausnehmungen | 10 |
| Schrägfläche | 11a, 11b |
| Anlagebund | 12 |
| Dichthülse | 13 |
| Formwerkzeug | 14 |
| Anlagefläche | 15 |
| Schraubbohrung | 16 |
| Austrittsöffnung | 17 |
| Zuleitungsraum | 24 |
| Verschlussnadel | 18 |
| Gabelstege | 19, 20 |
| Spalt | 21 |
| Spalt | 22 |
| Anschnittsbohrung | 23 |
| Ansatzraum | 25 |
| Bohrung | 26 |
| Hülse | 27 |
| Spitze | 28 |
| Antrieb (Zylinder) | 30 |
| Kolben | 31 |
| Zwischenelement (Hubplatte) | 32 |
| Hubraum | 33 |
| Kolbenstange | 34 |
| Heizung | 35 |
| Formwerkzeugteile | 36, 37, 38, 39 |
| Verschlußnadel | 41 |
| Bohrung | 42 |
| Antrieb | 43 |
| Antriebswelle | 44 |
| Ausnehmung | 45 |
| Abtriebszahn | 46 |
| Ausnehmung | 47 |
| Stange | 48 |
| Ansatz | 49 |
| Ausnehmung | 50 |
| Düsenkörper-Halterung | 51 |
| Basisschenkel | 52 |
| Halteschenkel | 53, 54 |
| Ausnehmungen | 55, 56 |

## Patentansprüche

1. Heißkanaldüse
a) für das seitliche Anspritzen von Kunststoffbauteilen,
b) mit einem vorzugsweise mehrteiligen Düsenkörper (1, 2, 3),
c) wobei der Düsenkörper (1, 2, 3) wenigstens einen oder mehrere Spitzeneinsätze (5) aufweist,
d) wobei die Spitzeneinsätze (5) zumindest jeweils
d1) ein Spitzenelement (6) mit
d2) einem Spitzenabschnitt (6b) aufweisen,
e) welcher Spitzenabschnitt (6b) jeweils über die Umfangsfläche des Düsenkörpers in eine Formplatte (14) nach außen vorsteht,
f) wobei zumindest die Spitzenabschnitte (6b) der Spitzenelemente (6) von Verschlussnadeln (18, 41) durchsetzt sind, und
g) wobei die Verschlussnadeln (18, 41) mit einem Antrieb zwischen einer Position, in welcher sie eine Anschnittsbohrung (23) in der Formplatte (14) verschließen und einer Position, in welcher sie diese freigeben, hin und her beweglich sind.
**dadurch gekennzeichnet, dass**
h) die Verschlussnadeln (18) und die Spitzeneinsätze (5) winklig, insbesondere rechtwinklig, zueinander angeordnet sind und dass die Anschnittsbohrung (23) in der Formplatte (14) winklig, insbesondere rechtwinklig - zur Haupterstreckungsrichtung (Y) der Spitzenelemente ausgerichtet ist.

2. Heißkanaldüse nach Anspruch 1, **dadurch gekennzeichnet, dass** der Spitzenabschnitt (6B) mit einer gabelförmigen Spitze mit zwei Gabelstegen (19, 20) versehen ist, zwischen denen ein Spalt (21) ausgebildet ist, welche die Verschlussnadel (18) durchsetzt, ohne den Spitzenabschnitt (6) der Spitzeneinsätze (5) zu berühren und dass die Gabelstege (19, 20) vorzugsweise derart gestaltet sind, dass sie den Wärmestrom und damit den Schmelzestrom aus der Y-Richtung um 90° in X-Richtung, in den Bereich des Anschnittes 23, führen.

3. Heißkanaldüse nach einem der vorstehenden Ansprüche, **dadurch gekennzeichnet, dass** die wenigstens eine Verschlussnadel (18) in keiner Betriebsstellung den Düsenkörper berührt.

4. Heißkanaldüse
a) für das seitliche Anspritzen von Kunststoffbauteilen,
b) mit einem vorzugsweise mehrteiligen Düsenkörper (1, 2, 3),
c) wobei der Düsenkörper (1, 2, 3) wenigstens einen oder mehrere Spitzeneinsätze (5) aufweist,
d) wobei die Spitzeneinsätze (5) zumindest jeweils
d1) ein Spitzenelement (6) mit
d2) einem Spitzenabschnitt (6b) aufweisen,
e) welcher Spitzenabschnitt (6b) jeweils über die Umfangsfläche des Düsenkörpers in eine Formplatte (14) nach außen vorsteht,
f) wobei zumindest die Spitzenabschnitte (6b) der Spitzenelemente (6) von Verschlussnadeln (18, 41) durchsetzt sind, und
g) wobei die Verschlussnadeln (18, 41) mit einem Antrieb zwischen einer Position, in welcher sie eine Anschnittsbohrung (23) in der Formplatte (14) verschließen und einer Position, in welcher sie diese freigeben, hin und her beweglich sind.
h) die wenigstens eine Verschlussnadel (41) und die Spitzenelemente (6) gleichsinnig ausgerichtet sind und dass die Anschnittsbohrungen (23) in Richtung der Hauptachse (Y) der Spitzenelemente (6) ausgerichtet sind,
**dadurch gekennzeichnet, dass**
i) die eine oder mehreren Verschlussnadeln (41) die Spitzenelemente (6) vollständig axial durchsetzen und dass die Verschlussnadeln (41) an ihren von den Anschnittsbohrungen (23) abgewandten Seiten jeweils einen Antriebszahn (46) aufweisen, mit dem sie in eine Ausnehmung (47) in einer drehbar in dem Düsenkörper gelagerten Antriebswelle (44) eingreifen.

5. Heißkanaldüse nach Anspruch 4, **dadurch gekennzeichnet, dass** die Antriebswelle (44) einen Ansatz (49) aufweist, der über eine Stange (48) und ggf. weitere Antriebselemente oder direkt mit einem fluidbetätigten oder pneumatischen Zylinder (30) gekoppelt ist.

6. Heißkanaldüse nach einem der vorstehenden Ansprüche 4 bis 5, **dadurch gekennzeichnet, dass** die Ausnehmung (47) in der Antriebswelle die Form einer Evolventenverzahnungs-Ausnehmung aufweist.

7. Heißkanaldüse nach einem der vorstehenden Ansprüche 4 bis 6, **dadurch gekennzeichnet, dass** der Düsenkörper einen mehreckigen, insbesondere rechteckigen, Querschnitt aufweist und dass an einer oder mehreren Seiten des Düsenkörpers mehrere der Spitzeneinsätze in einer geraden Reihe angeordnet sind und dass mehrere der Verschlussnadeln (41) mit nur einer einzigen Antriebswelle (44) bewegt werden.

8. Heißkanaldüse nach einem der vorstehenden Ansprüche, **dadurch gekennzeichnet, dass** die Spitzeneinsätze (5) jeweils mit einem Düsenkörper-Klemmscheibenabschnitt (3) an einem Düsenköperbasisabschnitt fixiert sind.

## Claims

1. A hot nozzle
a) for the lateral spraying of plastic components,
b) comprising a preferably multipart nozzle body (1, 2, 3),
c) wherein the nozzle body (1, 2, 3) comprises at least one or several tip insets (5),
d) wherein the tip insets (5) comprise at least
d1) one tip element (6) each with
d2) a tip section (6b),
e) which tip section (6b) respectively protrudes outwardly beyond the circumferential surface of the nozzle body into a molding plate (14),
f) wherein at least the tip sections (6b) of the tip elements (6) are penetrated by shut-off needles (18, 41), and
g) wherein the shut-off needles (18, 41) are movable in a reciprocating manner by means of a drive between a position in which they close off a feed borehole (23) in the molding plate (14) and a position in which they release the same, **characterized in that**
h) the shut-off needles (18) and the tip insets (5) are arranged at an angle, especially a right angle, in relation to each other and that the feed borehole (23) is aligned at an angle, especially a right angle, in the molding plate (14) in relation to the direction of the main extension (Y) of the tip elements.

2. A hot nozzle according to claim 1, **characterized in that** the tip section (6B) is provided with a fork-like tip with two fork webs (19, 20), between which a gap (21) is formed which penetrates the shut-off needle (18) without touching the tip section (6) of the tip insets (5), and the fork webs (19, 20) are preferably formed in such a way that they guide the heat flow and thereby the melt flow from the Y direction by 90° in the X direction into the region of the gate 23.

3. A hot nozzle according to one of the preceding claims, **characterized in that** the at least one shut-off needle (18) does not touch the nozzle body in any operating position.

4. A hot nozzle
a) for the later spraying of plastic components,
b) comprising a preferably multipart nozzle body (1, 2, 3),
c) wherein the nozzle body (1, 2, 3) comprises at least one or several tip insets (5),
d) wherein the tip insets (5) comprise at least
d1) one tip element (6) each with
d2) a tip section (6b),
e) which tip section (6b) respectively protrudes outwardly beyond the circumferential surface of the nozzle body into a molding plate (14),
f) wherein at least the tip sections (6b) of the tip elements (6) are penetrated by shut-off needles (18, 41), and
g) wherein the shut-off needles (18, 41) are movable in a reciprocating manner by means of a drive between a position in which they close off a feed borehole (23) in the molding plate (14) and a position in which they release the same,
h) the at least one shut-off nozzle (41) and the tip elements (6) are aligned in the same direction and the feed boreholes (23) are aligned in the direction of the main axis (Y) of the tip elements (6),
**characterized in that**
i) the one or several shut-off needles (41) axially completely penetrate the tip elements (6), and the shut-off needles (41) respectively comprise a drive tooth (46) on their sides facing away from the feed boreholes (23), with which they engage in a recess (47) in a drive shaft (44) held rotatably in the nozzle body.

5. A hot nozzle according to claim 4, **characterized in that** the drive shaft (44) comprises a shoulder (49) which is coupled via a rod (48) and optionally further drive elements, or directly to a fluid-actuated or pneumatic cylinder (30).

6. A hot nozzle according to one of the preceding claims 4 to 5, **characterized in that** the recess (47) in the drive shaft has the shape of an involute gear recess.

7. A hot nozzle according to one of the preceding claims 4 to 6, **characterized in that** the nozzle body has a polygonal, especially rectangular, cross section and several of the tip insets are arranged in a straight row on one or several sides of the nozzle body, and several of the shut-off needles (41) are moved with only one single drive shaft (44).

8. A hot nozzle according to one of the preceding claims, **characterized in that** the tip insets (5) are respectively fixed by a nozzle body clamping disk section (3) to a nozzle body base section.

## Revendications

1. Buse de canal chaud
a) pour l'application par injection latérale sur des pièces en plastique,
b) avec un corps de buse (1, 2, 3) de préférence en plusieurs parties,
c) dans laquelle le corps de buse (1, 2, 3) présente au moins un ou plusieurs embouts de pointe (5),
d) dans laquelle les embouts de pointe (5) comprennent chacun au moins
d1) un élément de pointe (6) avec
d2) une partie de pointe (6b),
e) laquelle partie de pointe (6b) dépasse vers l'extérieur au-delà de la surface périphérique du corps de buse dans une plaque-modèle (14),
f) dans laquelle les parties de pointe (6b) des éléments de pointe (6), au minimum, sont traversées par des aiguilles d'obturation (18, 41) et
g) dans laquelle les aiguilles d'obturation (18, 41) peuvent être déplacées en va-et-vient par un entraînement entre une position dans laquelle elles ferment un alésage d'entrée d'injection (23) dans la plaque-modèle (14) et une position dans laquelle elles dégagent celui-ci, **caractérisée en ce que**
h) les aiguilles d'obturation (18) et les embouts de pointe (5) sont disposés en formant un angle, en particulier un angle droit, les uns par rapport aux autres et **en ce que** l'alésage d'entrée d'injection (23) est orienté dans la plaque-modèle (14) selon un angle, en particulier un angle droit, par rapport au sens d'étendue principal (Y) des éléments de pointe.

2. Buse de canal chaud 1, **caractérisée en ce que** la partie de pointe (6B) est munie d'une pointe en forme de fourche avec deux bras de fourche (19, 20) entre lesquels est formé un interstice (21) que l'aiguille d'obturation traverse (18) sans toucher la partie de pointe (6) des embouts de pointe (5), et **en ce que** les bras de fourche (19, 20) sont de préférence conformés de façon à conduire le flux de chaleur et ainsi le flux de matière fondue à 90° de la direction de l'axe Y à la direction de l'axe Y dans la zone de l'entrée d'injection (23).

3. Buse de canal chaud selon l'une des revendications précédentes, **caractérisée en ce que** l'au moins une aiguille d'obturation (18) touche le corps de la buse dans sa position de fonctionnement.

4. Buse de canal chaud
a) pour l'application par injection latérale sur des pièces en plastique,
b) avec un corps de buse (1, 2, 3) de préférence en plusieurs parties,
c) dans laquelle le corps de buse (1, 2, 3) présente au moins un ou plusieurs embouts de pointe (5),
d) dans laquelle les embouts de pointe (5) comprennent chacun au moins
d1) un élément de pointe (6) avec
d2) une partie de pointe (6b),
e) laquelle partie de pointe (6b) dépasse vers l'extérieur au-delà de la surface périphérique du corps de buse dans une plaque-modèle (14),
f) dans laquelle les parties de pointe (6b) des éléments de pointe (6), au minimum, sont traversées par des aiguilles d'obturation (18, 41) et
g) dans laquelle les aiguilles d'obturation (18, 41) peuvent être déplacées en va-et-vient par un entraînement entre une position dans laquelle elles ferment un alésage d'entrée d'injection (23) dans la plaque-modèle (14) et une position dans laquelle elles dégagent celui-ci,
h) l'au moins une aiguille d'obturation (41) et les éléments de pointe (6) sont orientés dans le même sens et les alésages d'entrée d'injection (23) sont orientés dans le sens de l'axe principal (Y) des éléments de pointe (6),
**caractérisée en ce que**
i) les une ou plusieurs aiguilles d'obturation (41) traversent complètement les éléments de pointe (6) dans le sens axial et **en ce que** les aiguilles d'obturation (41) présentent, à leur extrémité opposée aux alésages d'entrée d'injection (23), une dent d'entraînement (46) avec laquelle elles engrènent dans un creux (47) d'un arbre d'entraînement (44) supporté avec possibilité de rotation dans le corps de buse.

5. Buse de canal chaud selon la revendication 4, **caractérisée en ce que** l'arbre d'entraînement (44) présente un épaulement (49) qui est couplé, par l'intermédiaire d'une tringle (48) et éventuellement d'autres éléments d'entraînement ou directement, à un vérin hydraulique ou pneumatique (30).

6. Buse de canal chaud selon l'une des revendications 4 à 5, **caractérisée en ce que** le creux (47) dans l'arbre d'entraînement a la forme d'un creux de denture à développante.

7. Buse de canal chaud selon l'une des revendications 4 à 6, **caractérisée en ce que** le corps de buse présente une section polygonale, de préférence rectangulaire, et **en ce que** plusieurs des embouts de pointe sont disposés sur une ou plusieurs faces du corps de buse en rangée rectiligne et **en ce que** plusieurs des aiguilles d'obturation (41) sont déplacées par un seul arbre d'entraînement (44).

8. Buse de canal chaud selon l'une des revendications précédentes, **caractérisée en ce que** les embouts de pointe (5) sont fixés chacun à une partie de base du corps de buse par une partie de disque de serrage du corps de buse (3).
